Europäisches Patentamt

European Patent Office

Office européen des brevets

(19)

(11) **EP 1 071 242 A1**

(12) ## DEMANDE DE BREVET EUROPEEN

(43) Date de publication:
**24.01.2001 Bulletin 2001/04**

(51) Int Cl.⁷: **H04L 9/00**

(21) Numéro de dépôt: **00402085.5**

(22) Date de dépôt: **21.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **23.07.1999 FR 9909604**

(71) Demandeur: **FRANCE TELECOM**
**75015 Paris (FR)**

(72) Inventeurs:
• **Oudaltsov, Vladimir**
 **57070 Metz (FR)**
• **Larger, Laurent**
 **25000 Besançon (FR)**
• **Goedgebuer, Jean-Pierre**
 **25115 Pouilley les Vignes (FR)**

(74) Mandataire: **Texier, Christian et al**
 **Cabinet Regimbeau,**
 **26, Avenue Kléber**
 **75116 Paris (FR)**

(54) **Dispositifs pour l'émission ou la réception de signaux cryptés par chaos déterministe et système de transmission, notamment par radiocommunications, comportant de tels dispositifs**

(57)   Dispositif pour l'émission d'un signal crypté comportant un générateur de chaos produisant un signal électrique crypté et une boucle de contre réaction comportant des moyens formant ligne à retard, des moyens non linéaires, ainsi que des moyens mélangeurs qui reçoivent sur une entrée le signal de la boucle et sur une autre entrée le signal à crypter, caractérisé en ce que la boucle de contre-réaction comporte des moyens formant filtre qui limitent le spectre des signaux cryptés à une ou plusieurs bandes spectrales.

FIG.5

EP 1 071 242 A1

**Description**

La présente invention est relative à des techniques de cryptage par chaos déterministe destinées à assurer une confidentialité de transmission élevée.

L'invention trouve en particulier avantageusement application dans le cas de transmissions par radio-communications.

DOMAINE GENERAL DE L'INVENTION ET ETAT DE LA TECHNIQUE

Généralement les systèmes de codage utilisés dans les systèmes de transmission de signaux nécessitant une confidentialité élevée reposent sur l'utilisation de clés de cryptage et d'algorithmes générés par voie informatique. Cette solution n'est toutefois pas toujours la mieux adaptée, notamment lorsqu'il est nécessaire de crypter des signaux avec un niveau de sécurité et/ou un débit élevé du fait de la complexité des algorithmes alors nécessaires. De plus, l'implantation de tels circuits de codage et de décodage informatique dans les systèmes de transmission (tels que, par exemple, dans les réseaux TV) se heurte à des problèmes de coût. Celui-ci doit rester faible pour répondre aux besoins d'une diffusion commerciale sur une grande échelle, alors que la complexité du cryptage doit rester suffisamment élevée pour que le code ne soit pas cassable par des moyens facilement accessibles à l'usager ordinaire. Celui-ci sera en effet de plus en plus facilement en mesure de se procurer, légalement ou non, des logiciels ad-hoc de décryptage adaptés aux algorithmes standards de cryptage.

Des méthodes de codage de signaux par chaos ont été étudiées dans le but de surmonter ces difficultés. Dans le cryptage par chaos, le message est caché dans un signal chaotique, c'est-à-dire dans un signal qui fluctue de façon aléatoire mais déterministe. L'expéditeur du message possède un générateur de chaos qui permet de masquer le message en clair dans un signal chaotique. Le destinataire possède un autre générateur de chaos qui doit être synchronisé sur le premier pour pouvoir décrypter correctement le message.

Quelques réalisations ont été effectuées à partir de circuits électroniques utilisant des éléments non linéaires à seuil ou à cycle d'hysteresis comme des diodes (circuits dits de Chua).

Dans ce cadre, on pourra se reporter aux références suivantes :

[1] M. Storace, "Secure communication by hysteresis-based chaotic circuit, Elect. Lett., 31, 11, 1077, 1998.

[2] S. Hayes, C. Grebogi and E. Ott, "Communicating with chaos", Phys. Rev. Lett., Vol. 70, p. 3031, 1993.

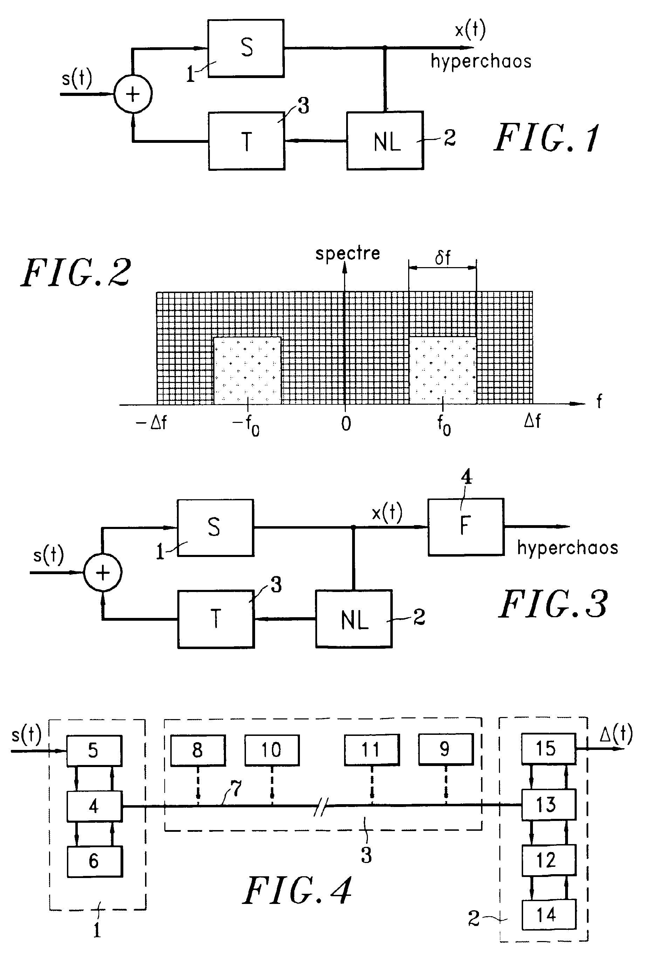

Les générateurs de chaos parmi les plus intéressants pour être utilisés pour le cryptage sont les dispositifs appelés "systèmes non linéaires à retard" (Figure 1). Ils sont constitués par une source 1 générant le signal chaotique x(t), munie d'une boucle de contre-réaction formée d'un élément non linéaire 2 et d'une ligne à retard 3. La boucle de contre-réaction présente physiquement une constante de temps τ que l'on peut assimiler à celle d'un filtre passe-bas.

Ils présentent l'avantage d'être simples tout en produisant des chaos de très grande dimension, appelés hyperchaos, ce qui permet d'obtenir une confidentialité très élevée. Un autre avantage est d'obtenir une auto-synchronisation parfaite du générateur de chaos du destinataire sur celui de l'émetteur permettant ainsi de décrypter le message.

On pourra se reporter aux documents suivants dans lesquels les dispositifs sont réalisés à partir de composants électroniques ou optiques :

[3] P. Celka, "Chaotic synchronization and modulation of non-linear time-delayed feedback optical systems", IEEE Transactions on Circuits and Systems, Vol. 42, N°8, p.1, 1995.

[4] T. Takizawa, T. Liu and J. Ohtsubo, "Chaos in a feedback Fabry-Pérot interferometer", IEEE Journal of Quantum Electronics, Vol. 30, N°2, p.334, 1994.

[5] A. Tamasevicius, A. Cenys, G. Mikolaitis, A. Namajunas and E. Lindberg, "Synchronisation of hyperchaotic oscillators", Electr. Let. Vol. 33, N° 24, p.2025, 1997.

[6] G.D. Van Wiggeren and R. Roy, "Communication with chaotic laser", Science, Vol. 279, p.1198, 1998.

[7] Demande de brevet FR 2 743 459

[8] Demande de brevet FR 9806892, 1998.

[9] L.Larger, J.P. Goedgebuer, F.Delorme, "Optical encryption system using hyperchaos generated by an optoelectronic wavelength oscillator", Physical Review E, 57, 6, 1998, pp 6618-6624.

[10] J.P. Goedgebuer, L.Larger, H.Porte, "Optical cryptosystem based on synchronization of hyperchaos generated by a delayed feedback tunable laser diode", Physical Review Letters, 80, 10, 1998, 2249.

Les documents [3] et [4] décrivent des générateurs hyperchaotiques optiques avec, dans le cas du document [3], un procédé de synchronisation extrêmement compliqué. La figure 3 du document [5] décrit des générateurs hyperchaotiques électroniques à retard qui peuvent être synchronisés entre eux. Ce document ne précise pas comment ce système peut être utilisé pour crypter et décrypter des signaux, et si les conditions de synchronisation sont maintenues en présence d'un message. Les documents [6 - 9] proposent des générateurs hyperchaotiques optiques dont les conditions de synchronisation sont obtenues, comme dans le cas de la présente invention, en utilisant comme récepteur un générateur hyperchaotique à boucle de contre-réaction ouverte.

Le problème commun à l'ensemble des générateurs hyperchaotiques décrits dans ces documents est qu'ils génèrent des chaos en bande de base. Par chaos en bande de base, on entend un chaos dont le spectre est continu sur une bande de fréquence 2 Δf centrée sur la fréquence 0, comme le montre la Figure 2. Lorsqu'on utilise un tel chaos pour crypter un message dont la largeur de bande δf est nettement plus petite que Δf, les fréquences du chaos situées en dehors de la bande δf utile du message sont inexploitées. Le chaos produit par ces générateurs est donc très consommateur en bande passante, ce qui constitue un inconvénient important en radiocommunications.

En radiocommunications, les transmissions font en effet généralement intervenir des canaux à bande étroite (par exemple de 200 kHz de largeur), centrés sur des fréquences porteuses élevées (par exemple quelques GHz). Ces conditions de fonctionnement diffèrent donc des transmissions en bande de base. Pour ce qui est de l'ensemble des dispositifs de cryptage précédemment cités, le fait qu'ils produisent un chaos en bande de base est donc un désavantage en télécommunication.

Ainsi, les demandes de brevet FR 2 743 459 et FR 98 06 892 décrivent des systèmes de cryptage qui permettent d'obtenir facilement les conditions d'auto-synchronisation nécessaires pour que le destinataire puisse décrypter le message. Dans ces systèmes, et en se référant de nouveau à la Figure 1, l'émetteur est un générateur d'hyperchaos formé d'une source optique 1 et d'un composant non linéaire 2 en longueur d'onde ou en énergie inséré dans une boucle de contre-réaction munie d'une ligne à retard 3. La demande de brevet FR 2744 459 ainsi que les références [3, 4, 5, 6, 9, 10] rapportent que la loi d'évolution x(t) du chaos obtenu en fonction du temps est régie par une équation différentielle non linéaire du type (cf par exemple eq.1 de [7] ou eq.3 de [5]):

$$x(t) + \tau \frac{d}{dt} x(t) = \beta NL\big[x(t - T)\big] \qquad \qquad (1)$$

où NL est une fonction non linéaire et β le paramètre de bifurcation et T le retard.

Le brevet FR 98 06 892 rapporte une autre loi du type (équation 1 de la référence [8]):

$$\cos^{-1}\{x(t) - 1\} + \tau \frac{d}{dt}\{\cos^{-1} x(t) - 1\} = \beta x(t - T) \qquad (2)$$

Dans les deux cas, ainsi que dans ceux des dispositifs cités auparavant, le chaos x (t) est un chaos à bande de base caractérisé par un spectre analogue à celui d'un bruit blanc, tel que celui déjà illustré à la Figure 2, avec une largeur de bande qui s'étend du continu à la fréquence Δf = 1/2 π τ, où τ est la constante de temps de la boucle de contre-réaction. On se reportera ainsi à la figure de la référence [3], ou à la figure 3B de la référence [6], ou encore aux figures 8 et 9 de la référence [9]. Le signal chaotique obtenu est asymptotiquement à statistique gaussienne.

Ainsi lorsque ces systèmes sont utilisés pour crypter des signaux télécoms dont les débits sont normalisés (par exemple 550 Mbits/s), une grande partie du spectre de fréquence du chaos est inutilisée. Outre l'encombrement en fréquence et le coût en bande passante qui en résultent, un autre inconvénient est de rendre impossible la numérisation du signal crypté. En effet, les convertisseurs numériques standards utilisés en télécommunication ne sont en général pas adaptés à travailler avec des signaux en bande de base. Ceci constitue des désavantages importants pour les transmissions numériques.

Un autre inconvénient est que certains composants utilisés en téléphonie numérique, comme les vocodeurs, ne sont pas conçus pour utiliser des signaux à statistique gaussienne.

Pour remédier à cette situation, une solution pour limiter la bande de fréquence serait d'insérer un filtre passe-bande 4 à la sortie de l'émetteur de la Figure 1 de façon à ne garder et transmettre que la bande de fréquence utile du signal chaotique, comme le montre la Figure 3.

Toutefois, cette solution ne permet pas d'obtenir l'auto-synchronisation du récepteur sur l'émetteur ce qui rend impossible le décryptage du message par le destinataire. Cette solution n'est donc pas applicable.

PRESENTATION DE L'INVENTION :

Le but de l'invention est de remédier aux inconvénients précédents.

Elle propose un dispositif pour l'émission d'un signal crypté comportant un générateur de chaos produisant un signal électrique crypté et une boucle de contre réaction comportant des moyens formant ligne à retard, des moyens non linéaires, ainsi que des moyens mélangeurs qui reçoivent sur une entrée le signal de la boucle et sur une autre entrée le signal à crypter, ladite boucle de contre-réaction comportant des moyens formant filtre qui limitent le spectre des signaux cryptés à une ou plusieurs bandes spectrales.

Avantageusement notamment, lesdits moyens formant filtre disposés dans la boucle de contre-réaction présentent une fonction de transfert qui répartit statistiquement le signal chaotique selon un profil spectral donné.

L'invention propose également un dispositif pour la réception d'un signal crypté comportant des moyens de réception dudit signal et une boucle de contre-réaction qui comprend des moyens formant ligne à retard et des moyens non linéaires tel que, pour la réception d'un signal crypté par un dispositif d'émission du type précité, la boucle de contre-réaction comporte des moyens formant filtre identiques aux moyens formant filtre de la boucle contre réaction du dispositif d'émission.

Ces dispositifs d'émission ou de réception sont avantageusement utilisés dans des dispositifs d'émission et/ou de réception d'un signal crypté de transmission par radio-communication porteur de signaux vocaux.

L'invention concerne également des systèmes de transmission comportant un dispositif d'émission et un dispositif de réception complémentaire tels que définis ci-dessus, ainsi qu'une ligne de transmission entre ledit dispositif d'émission et ledit dispositif de réception.

Avec de tels dispositifs d'émission ou de réception ou un tel système de transmission, on dispose d'un système de cryptage/décryptage de signaux analogiques ou numériques par hyperchaos, dont les propriétés spectrales, et le cas échéant statistiques, sont directement compatibles avec celles des systèmes de télécommunication.

De tels dispositifs d'émission/réception peuvent en outre être intégrés dans des structures simples, compactes, utilisant des composants électroniques standards et bon marché, permettant une fabrication à grande échelle, et destinées à être « prêt à brancher» ("plug-and-play" selon la terminologie anglo-saxonne).

A titre d'exemples non limitatifs, ils peuvent par exemple être utilisés dans des systèmes de téléphonie filaire, de radiocommunications fixes ou mobiles, de transmission de données, dans les terminaux portables, etc...

On notera en outre que dans les systèmes proposés par l'invention, le signal chaotique servant de porteuse pour l'information est à spectre de bande relativement étroit tout en permettant d'obtenir les conditions de synchronisation entre émetteur et récepteur nécessaires pour effectuer le décryptage de l'information.

Le degré de confidentialité de l'information cryptée est déterminé par la complexité du chaos généré par le dispositif de cryptage. Le système proposé ne permet pas à un usager "ordinaire" de casser la clé de cryptage même s'il connaît les propriétés statistiques du chaos utilisé.

Pratiquement, la clé est déterminée par les paramètres du systèmes (type de non linéarité utilisée, valeur du retard introduit dans la boucle de contre-réaction, profil spectral du filtre passe-bande utilisé, etc.). La précision requise sur la connaissance de ces paramètres est telle qu'elle rend extrêmement difficile pour un espion leur recherche exhaustive.

Dans une variante avantageuse, un dispositif d'émission peut comporter plusieurs modules d'émission en cascade chacun constitué par un dispositif d'émission du type précité.

Un dispositif pour la réception d'un signal crypté par un tel dispositif d'émission comporte plusieurs modules de réception en cascade chacun constitué par un dispositif de réception du type présenté ci-dessus, ces modules étant dans le même nombre que les modules du dispositif d'émission, les moyens formant filtre que comportent les boucles de contre-réaction des modules de réception présentant des caractéristiques identiques à celles des moyens formant filtre que comportent les boucles de contre-réaction des modules d'émission.

PRESENTATION DES FIGURES

D'autres caractéristiques et avantages de l'invention ressortiront encore de la description qui suit qui est purement illustrative et non limitative et qui doit être lue en regard des dessins annexés sur lesquels :

- la figure 1, déjà discutée, est une représentation schématique d'un générateur de chaos de type non linéaire à retard ;

- la figure 2, également déjà discutée, est un graphe sur lequel on a porté le spectre d'un chaos en bande de base ;
- la figure 3, également déjà discutée, est une représentation schématique d'un générateur de chaos du type de celui de la figure 1 complété par un filtre passe-bande ;
- la figure 4 est un schéma bloc illustrant de façon générale un mode de réalisation possible de l'invention ;

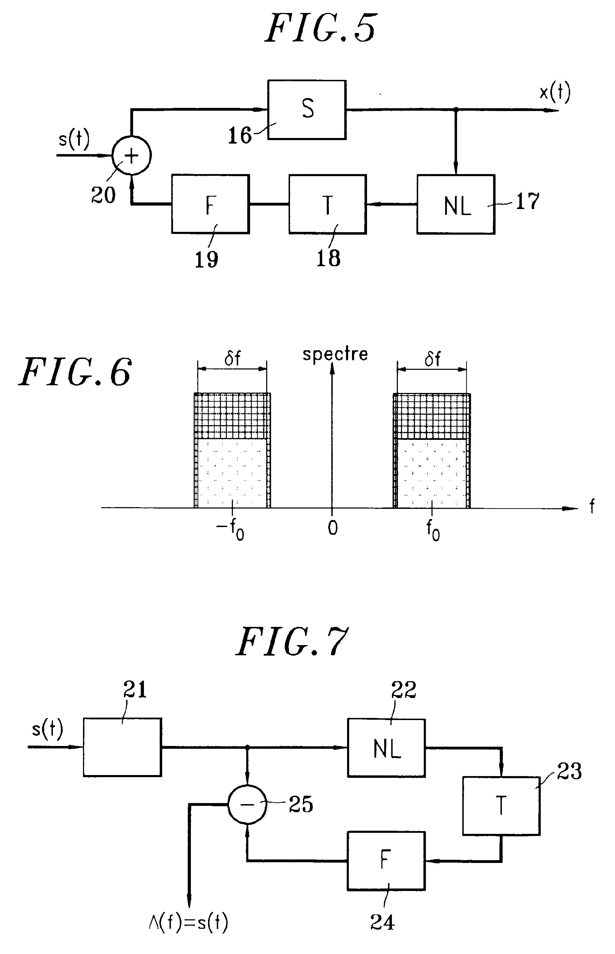

- la figure 5 est une représentation schématique d'un dispositif d'émission possible pour le dispositif de la figure 4 ;
- la figure 6 est un graphe sur lequel on a porté le spectre du chaos obtenu avec le dispositif de la figure 5 ;
- la figure 7 est une représentation schématique d'un dispositif de réception possible pour le dispositif de la figure 5 ;

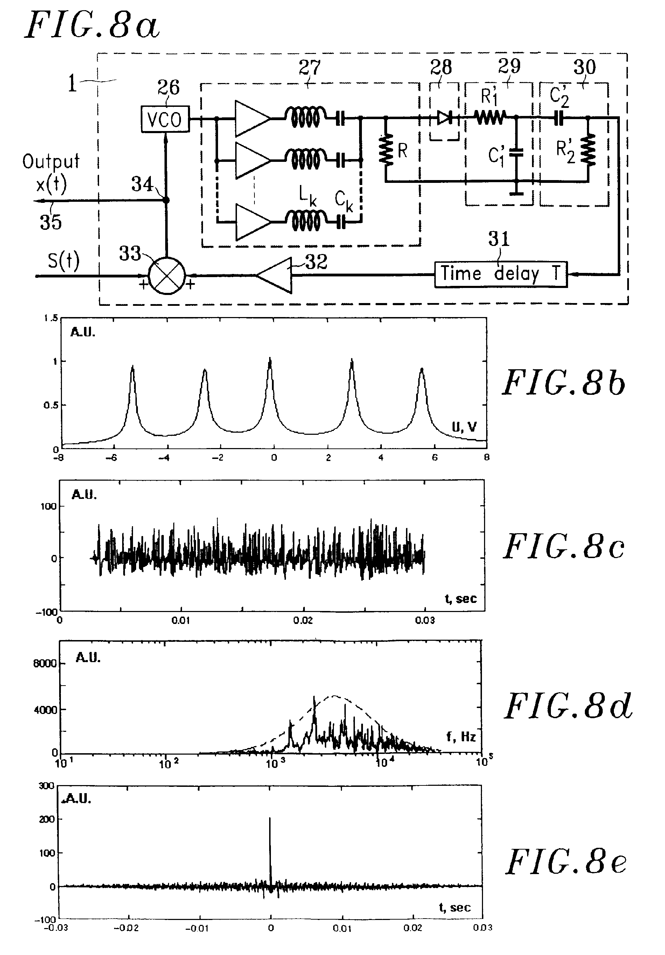

- la figure 8a est une représentation schématique d'un module de cryptage adapté au codage de signaux vocaux ;
- la figure 8b est un graphe sur lequel on a porté la fonction non linéaire NL obtenue avec 5 circuits résonants ;
- la figure 8c est un graphe sur lequel on a porté en fonction du temps un exemple de signal crypté x(t) obtenu à la sortie du module ;
- la figure 8d est un graphe sur lequel on a porté le spectre du signal crypté x(t) de la figure 8c ;
- la figure 8e est un graphe sur lequel on a porté la fonction d'autocorrélation dudit signal x(t) ;

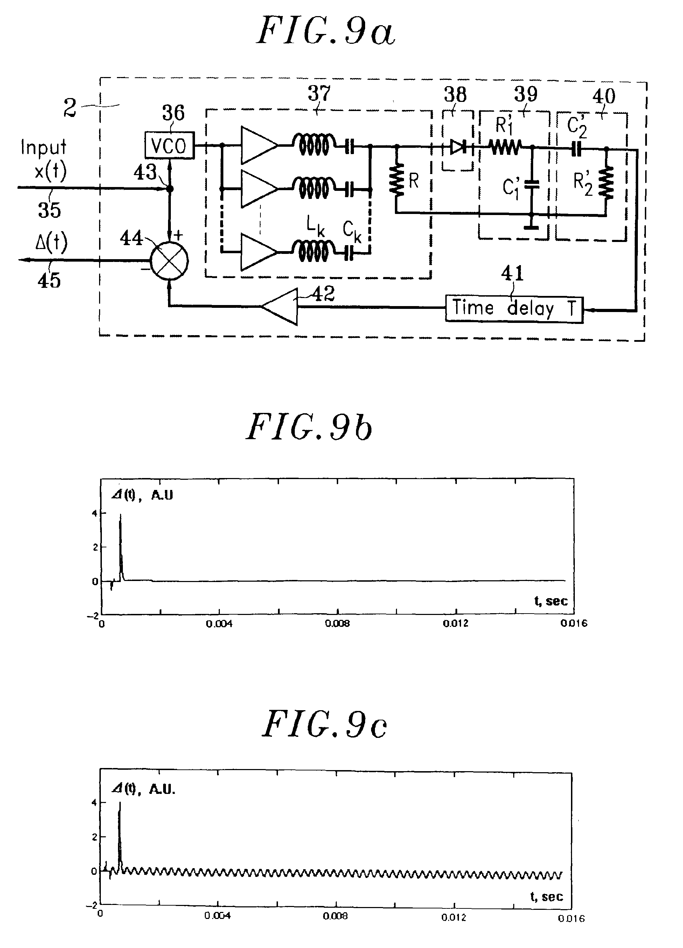

- la figure 9a est une représentation schématique d'un module de décodage adapté au module de cryptage de la Figure 8a ;
- la figure 9b est un graphe sur lequel on a porté le signal $\Delta$(t) obtenu à la sortie du module de décryptage lorsque s(t)=0 ;
- la figure 9c est un graphe sur lequel on a porté le signal $\Delta$(t) obtenu à la sortie du module de décryptage lorsque s(t) est un signal sinusoïdal ;

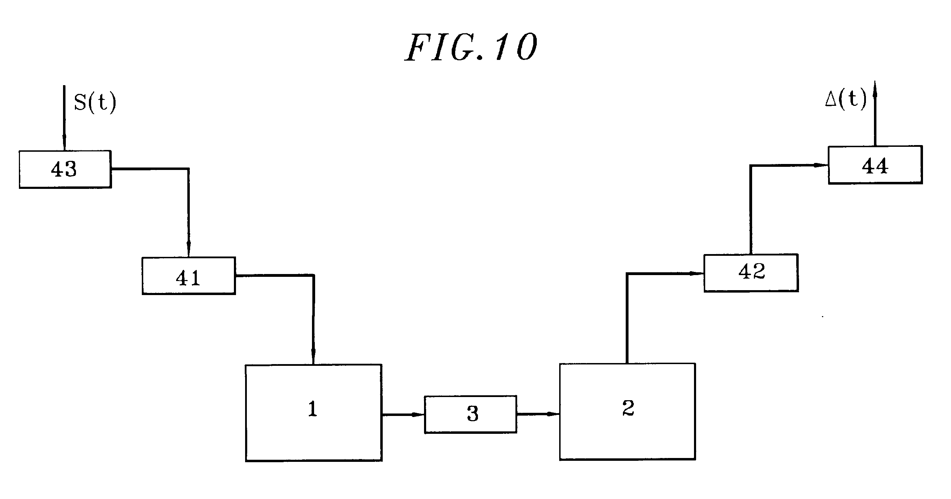

- la figure 10 est une représentation schématique d'un système mettant en oeuvre un surcryptage, constitué par plusieurs modules de codage et de décodage mis en cascade pour augmenter la confidentialité.

DESCRIPTION D'UN MODE DE REALISATION DE L'INVENTION

Le système de transmission représenté sur la figure 4 comprend des moyens d'émission 1 et des moyens de réception 2 entre lesquels le signal, véhiculant l'information cryptée, est transmis par des moyens de transmission 3.

Les moyens d'émission 1 comprennent un générateur de chaos 4, un système de cryptage 5 destiné à injecter le message clair s(t) dans le générateur de chaos 4, et le filtre 6 destiné à obtenir un signal chaotique avec une bande de fréquence donnée et éventuellement des propriétés statistiques particulières.

Les moyens de transmission 3 comprennent le canal de transmission 7 et, éventuellement, des convertisseurs analogique /numérique et numérique /analogique, référencés respectivement par 8 et 9, permettant d'effectuer la conversion numérique ou analogique du signal crypté. Ces moyens de transmission peuvent ainsi comprendre des émetteurs FM/AM 10 et des récepteurs FM/AM 11 tels que ceux utilisés dans les systèmes de radio-communication standards, ces émetteurs 10 et 11 étant disposés respectivement en aval et en amont des convertisseurs 8 et 9.

Le système de la Figure 4 permet de crypter un message dans un chaos à bande limitée, de convertir le signal ainsi crypté sous forme numérique et de le transmettre au moyen d'une porteuse haute fréquence par modulation d'amplitude, par modulation de fréquence ou par modulation de phase. Cela signifie que ledit système peut transférer le signal chaotique crypté dans une bande de fréquence radio ou micro-onde. Le problème technique est que ceci ne peut être réalisé que si le système de cryptage produit un chaos ayant des propriétés spectrales et/ou statistiques bien particulières, comme on l'a déjà souligné.

Une structure de dispositif d'émission permettant de résoudre ce problème est représentée sur la Figure 5.

L'émetteur représenté sur cette figure est constitué par un générateur de chaos comportant une source 16 pour la génération dudit chaos, une boucle de contre-réaction qui comporte des moyens non linéaires 17, des moyens 18 formant ligne à retard, un filtre passe-bande 19 centré sur la fréquence fo du message à crypter et de largeur δf légèrement supérieure à la bande passante du message s(t), et un circuit mélangeur 20 qui mélange s(t) au signal issu du filtre passe-bande 19.

Dans une version, le mélangeur 20 est un circuit sommateur.

Dans une autre version, le retard introduit par les moyens 18 peut être modifié en appliquant le message s (t) sur l'élément 18.

Le dispositif d'émission peut être avantageusement réalisé à partir de composants électroniques pour l'émission de signaux radiofréquences cryptés, la source pour la génération du signal étant alors un oscillateur dont la fréquence peut être accordée électriquement (en anglais, VCO ou voltage-controlled-oscillator), et l'élément non linéaire étant formé par un ou plusieurs filtres passe-bande actifs ou passifs, présentant un ou plusieurs extremas.

Ainsi, le dispositif d'émission de, la figure 5 se distingue des générateurs de chaos proposés dans les publications ou demandes de brevet [1] à [10] par le fait qu'un filtre passe-bande adapté à la bande de fréquence du message est inséré dans la boucle de contre-réaction. Il en résulte que les propriétés statistiques et spectrales du chaos alors obtenu sont différentes. Il est ainsi possible de définir les caractéristiques du filtre pour générer un signal chaotique directement adapté au canal de transmission.

Ainsi, dans le cas de la Figure 5, et dans le cas où le filtre passe-bande 19 est un filtre électrique de première espèce dont les fréquences de coupure basse et haute sont f1 et f2 respectivement, le signal électrique x(t) à la sortie de l'émetteur est régi par un système d'équations différentielles du type :

$$\begin{cases} \tau_1 \dfrac{d}{dt} u(t) + u(t) = \beta NL\{x(t-T) \\ \dfrac{d}{dt} u(t) = \dfrac{d}{dt} x(t) + \dfrac{1}{\tau_2} x(t) \end{cases} \qquad (3)$$

Ces deux équations peuvent également être mises sous la forme :

$$x(t) + \frac{1}{\frac{1}{\tau_1} + \frac{1}{\tau_2}} \frac{d}{dt} x(t) + \frac{1}{\tau_1 + \tau_2} \int x(t) dt = \frac{\tau_2}{\tau_1 + \tau_2} \beta NL\{x(t-T) \qquad (4)$$

avec $\tau_1 = 1/2\pi f_1$ et $\tau_2 = 1/2\pi f_2$. Le spectre du chaos obtenu est un spectre de bande de largeur $\delta f = f_2 - f_1$, centré sur la fréquence $f_0$, comme le montre la Figure 6.

Avantageusement, d'autres types de filtres passe-bande (filtre de seconde, troisième ordre, etc.) ou plusieurs filtres passe-haut et passe-bas mis en cascade peuvent être utilisés dans la boucle de contre-réaction pour obtenir des signaux cryptés chaotiques caractérisés par des spectres de bande à flancs abrupts et par des statistiques différentes de celles des signaux chaotiques gaussiens décrits dans les documents [3] à [10].

Le chaos x(t) obtenu et les équations (3) ou (4) qui le régit sont différents des modèles présentés dans les brevets déjà cités FR 2 743 459 et FR 9 806 892 dans lesquels le chaos doit obéir à une équation du type (1) ou (2). Ceci rend impossible l'utilisation des dispositifs de décryptage qui y sont décrits.

L'invention propose également un dispositif pour la réception correspondant à l'élément 2 de la Figure 4. Il comprend (Figure 7) un détecteur 21, des moyens non linéaires 22, des moyens formant ligne à retard 23, un filtre passe-bande 24 et un circuit 25 qui effectue l'opération inverse (au sens mathématique) de celle effectuée par le mélangeur 20 contenu dans l'émetteur. Ainsi, si le mélangeur 20 est un additionneur, le circuit 25 est un soustracteur qui effectue la soustraction Δ(t) entre le signal x(t) et le signal sortant du filtre passe-bande. Si le circuit 20 est un multiplieur, le circuit 25 est un diviseur. Le signal de sortie du circuit 25 constitue le message décrypté s(t). Les éléments 22, 23, 24 ont des caractéristiques identiques à celles des éléments 17, 18, 19 respectivement.

Ainsi, ce dispositif de réception permet d'obtenir une autosynchronisation parfaite du chaos qu'il génère sur celui qui est reçu, ce qui assure le décodage du message s(t) par le destinataire.

Le dispositif pour la réception représenté sur la figure 7 se distingue des dispositifs de décryptage proposés notamment dans les publications et demandes de brevet [1] à [10] par l'insertion dans la boucle de contre-réaction d'un filtre 24 identique au premier filtre 18 utilisé dans le dispositif d'émission. Le profil du filtre utilisé est déterminé au moyen des équations (3) et (4) pour que les propriétés spectrales et statistiques du chaos soient adaptées à celles des autres composants entrant dans la chaîne de transmission. Ainsi, en radiotéléphonie numérique, le dispositif selon l'invention permet d'obtenir des signaux chaotiques dont la bande de fréquence et la statistique sont adaptées à celles de la voix et sont donc adaptées aux vocodeurs standards. Ceci permet au dispositif de réception de s'auto-synchroniser automatiquement sur le signal crypté provenant de l'émetteur, et permet au destinataire de décrypter le message.

EXEMPLE D'APPLICATION

Les Figures 8 et 9 écrivent un exemple de réalisation d'un module électronique de cryptage et d'un module de décryptage adapté au codage de signaux vocaux pour application aux radio-communications.

a) Réalisation du module de cryptage (Figure 8a)

Il comprend :

- un oscillateur VCO (26) dont la fréquence d'émission f(t) est accordable par une tension d'entrée x(t) : f(t) = α x (t) où α est le taux d'accord en fréquence du VCO en fonction de la tension x (dans un exemple de réalisation, on

a $\alpha$ = 2.27 MHz/V et une excursion de fréquence dans la bande 25-55 MHz)

- un circuit non linéaire (27) formé par K circuits résonants ($L_k$ $C_k$) montés en parallèle. La réponse NL du circuit non linéaire (27) est :

$$NL(x) = \sum_{k=1}^{K} \frac{1}{\sqrt{1 + Q_k^2 (1 - \gamma_k^2)^2}}$$

avec :

$Q_k = L_k [\omega_0 + \alpha.x(t)] / R$
$\gamma_k = [\omega_0 + \alpha.x(t)] / R$
$\omega_0$ : fréquence angulaire du VCO
$\omega_k = \sqrt{1/LkCk}$ : fréquence angulaire de résonance du circuit oscillant k

La réponse en fréquence NL(f) présente K pics de résonance centrés sur les fréquences angulaires de résonance $\omega_k = 2 \pi f_k = \sqrt{1/LkCk}$.

La figure 8b illustre la fonction NL (f) obtenue dans le cas où l'on a

K = 5 circuits résonants [$L_1$ = 3.8µH, $L_2$ = $L_3$ =$L_4$ = 4 µH, $L_5$ = 5 µH
et $C_1$ = 2.4pF, $C_2$ = 2.9 pF, $C_3$ = 4 pF, $C_4$ = 5.4 pF, $C_5$ = 6.4 pF et R = 10 $\Omega$]. La fonction NL(f) est formée de 5 pics centrés sur les fréquences de résonance de chacun des circuits résonants : 28, 34, 40, 47 et 53 MHz.

- un détecteur (28) constitué par une diode ayant pour effet de transformer le signal f (t) d'amplitude NL [f (t)] issu du circuit (27) en un signal modulé en amplitude.

- un filtre passe-bande constitué d'un filtre passe-bas R'1C'1 (29) de fréquence de coupure

$f_1 = 1/2 \pi \sqrt{R'_1 C'_1}$. suivi d'un filtre passe-haut R'$_2$ C'$_2$ (30) de fréquence de coupure
$f_2 = 1/2 \pi \sqrt{R'_2 C'_2}$

Dans un exemple de réalisation, nous avons R'$_1$ = 10$\Omega$, R'$_2$ = 100$\Omega$, C'$_1$ = 5.3µF et C'$_2$=0.32µF, $f_1$ = 3kHz et $f_2$ = 5kHz, ce qui correspond à un filtre passe-bande de largeur $\Delta f = f_2 - f_1 = 2kHz$

- une ligne à retard numérique (31) introduisant un retard T (T = 1 ms).

- un amplificateur (32) permettant de régler le gain de la boucle de contre-réaction (c'est-à-dire la valeur du paramètre de bifurcation β; typiquement β $\sim$ 380).

- un mélangeur (33) disposé à la sortie du filtre passe-bande et permettant d'additionner le message à s(t) au signal se propageant dans la boucle de contre-réaction.

- un extracteur (34) permettant de prélever le signal chaotique se propageant dans la boucle de contre-réaction, pour l'envoyer dans le canal de transmission (35). Le signal prélevé en (34) constitue le signal crypté représenté à la Figure 8c. La Figure 8d représente le spectre du signal crypté, qui peut être comparé sur la figure avec la bande passante (en pointillés) du filtre passe-bande formé par les éléments (29) et (30) décrits précédemment. La Figure 8e représente la fonction d'autocorrélation du signal chaotique de la Figure 8c. La présence d'un pic de corrélation étroit confirme le caractère aléatoire du signal chaotique. Il est à noter que le type de statistique suivi par le signal chaotique peut être modifié en changeant les paramètres du circuit, tels que la valeur du retard T, du paramètre de bifurcation β, la fonction non linéaire NL, ou encore la forme du filtre passe-bande. Le type de statistique du signal chaotique peut être ainsi adapté à celle acceptée par les vocodeurs standards dans les applications de radiotéléphonie mobile.

Dans une autre version, les moyens non linéaires 27 peuvent êtres formés par des oscillateurs à quartz, ou des diodes RTD présentant un ou plusieurs pics de transmission.

Dans une autre version, le message s(t) peut être appliqué directement sur les moyens à retard 31 de façon à modifier la valeur du retard T. Cette solution est particulièrement avantageuse lorsque le signal s(t) est un signal numérique.

b) Réalisation du module de décodage (Figure 9)

La Figure 9a montre un exemple de réalisation d'un décodeur adapté au codeur de la Figure 8a. Les composants (36-42) sont identiques aux composants (27-32) de la Figure 8a.

Le signal crypté provenant du canal de transmission (35) est appliqué à l'entrée 43 du VCO (36). Le soustracteur (44) effectue la différence entre le signal chaotique crypté provenant du canal de transmission (35) et le signal chaotique obtenu à la sortie de l'amplificateur (42). Le signal différence $\Delta(t)$ obtenu à la sortie (45) du soustracteur (44) donne le message s(t) décrypté.

La Figure 9b est un relevé expérimental du signal de sortie $\Delta(t)$ obtenu avec les circuits précédemment décrits lorsqu'aucun message s(t) n'est appliqué à l'entrée du codeur de la Figure 8a (s(t)=0). On a alors une synchronisation parfaite entre l'émetteur et le récepteur, la différence $\Delta(t)$ des chaos produits par l'émetteur et le récepteur étant nulle. La Figure 9c représente $\Delta(t)$ lorsque s(t) est un signal sinusoïdal de 4 kHz, dont l'amplitude est de 1% de celle du chaos utilisé pour le masquer.

Dans l'autre version, lorsqu'un message numérique s(t) est appliqué sur la ligne à retard 31 et modifie la valeur du retard T dans l'émetteur, le signal $\Delta(t)$ est nul (Figure 8a) pour le bit "0" (synchronisation entre émetteur et récepteur) et est chaotique pour le bit "1" (l'émetteur et le récepteur ne sont plus synchronisés).

Le dispositif peut être notamment utilisé pour sécuriser des signaux dans des bandes de fréquence aussi étroites que 5 kHz, notamment pour des applications à la transmission analogique ou numérique de la voix. Après cryptage du message (de la voix) sous forme d'un chaos analogique comme dans l'exemple donné ci-dessus, le signal crypté peut être converti sous forme numérique par des moyens connus de conversion analogique / numérique. Le signal crypté est alors codé sous forme d'un chaos numérique formé d'une séquence chaotique de bits par exemple à un débit typique de 100 kbits/s dans le cas des standards actuels.

Après transmission au destinataire, ce dernier converti le signal numérique crypté en un signal analogique par des moyens connus de conversion numérique / analogique et utilise le module de réception de la Figure 9 pour assurer le décryptage.

A noter également que le message s(t) peut être lui-même un signal numérique obtenu par numérisation de la voix dès l'entrée du codeur.

L'ensemble des moyens connus de transmission (par modulation d'amplitude, modulation de fréquence, par modulation de phase, par transposition de fréquence) peut également être utilisé pour effectuer la transmission des signaux cryptés analogiques ou numériques précédents, entre les modules de codage et de réception.

La Figure 10 démontre par ailleurs la possibilité d'augmenter le degré de sécurité du dispositif. Puisque le signal décrypté $\Delta(t)$ obtenu à la sortie du module de décodage de la Figure 9a reproduit exactement le signal s(t) appliqué à l'entrée du module de codage de la Figure 8a, il est possible d'utiliser plusieurs modules de codage formés de générateurs de chaos montés en cascade pour coder le message s(t) et ainsi augmenter la complexité du chaos transmis par l'émetteur.

Le module de décryptage est alors formé de plusieurs étages de démodulation montés en cascade, formés des mêmes générateurs de chaos que ceux utilisés dans les étages de modulation. A titre d'illustration, la Figure 10 correspond au cas où deux étages de modulation 41, 43 et de démodulation 42, 44 sont introduits pour augmenter le degré de sécurité du dispositif initial. La largeur de bande des chaos générés par ces étages de modulation et de démodulation supplémentaires doit être inférieure à celle des générateurs de chaos 1 et 2 utilisés dans les systèmes d'émission et de réception. Ceci permet d'obtenir une très grande complexité du signal chaotique cryptant l'information dans le canal de transmission 3.

**Revendications**

1. Dispositif pour l'émission d'un signal crypté comportant un générateur de chaos produisant un signal électrique crypté et une boucle de contre réaction comportant des moyens formant ligne à retard, des moyens non linéaires, ainsi que des moyens mélangeurs qui reçoivent sur une entrée le signal de la boucle et sur une autre entrée le signal à crypter, caractérisé en ce que la boucle de contre-réaction comporte des moyens formant filtre qui limitent le spectre des signaux cryptés à une ou plusieurs bandes spectrales.

2. Dispositif d'émission selon la revendication 1, caractérisé en ce que lesdits moyens formant filtre disposés dans la boucle de contre-réaction présentent une fonction de transfert qui répartit statistiquement le signal chaotique selon un profil spectral donné.

3. Dispositif d'émission selon l'une des revendications 1 ou 2, caractérisé en ce que lesdits moyens formant filtre disposés dans la boucle de contre-réaction comportent un filtre passe-bande.

4. Dispositif d'émission selon la revendication 3, caractérisé en ce que la bande passante dudit filtre couvre la bande spectrale du signal à crypter en étant d'une largeur de bande légèrement supérieure à ladite bande spectrale.

5. Dispositif pour l'émission d'un signal crypté, caractérisé en ce qu'il comporte plusieurs modules d'émission en cascade chacun constitué par un dispositif selon l'une des revendications précédentes.

6. Dispositif pour la réception d'un signal crypté comportant des moyens de réception dudit signal et une boucle de contre-réaction qui comprend des moyens formant ligne à retard et des moyens non linéaires, caractérisé en ce que pour la réception d'un signal crypté par un dispositif selon l'une des revendications 1 à 4, la boucle de contre-réaction comporte des moyens formant filtre dont les caractéristiques sont identiques à celles des moyens formant filtre de la boucle de contre réaction du dispositif d'émission.

7. Dispositif pour la réception d'un signal crypté par un dispositif d'émission selon la revendication 5, caractérisé en ce qu'il comporte plusieurs modules de réception en cascade chacun constitué par un dispositif selon la revendication 6, ces modules étant dans le même nombre que les modules du dispositif d'émission, les moyens formant filtre que comportent les boucles de contre-réaction des modules de réception présentant des caractéristiques identiques à celles des moyens formant filtre que comportent les boucles de contre-réaction des modules d'émission.

8. Dispositif d'émission et/ou de réception d'un signal de crypté de transmission par radio-communication porteur de signaux vocaux, caractérisé en ce qu'il comporte un dispositif selon l'une des revendications 1 à 7.

9. Système de transmission de signaux cryptés, caractérisé en ce qu'il comporte un dispositif d'émission selon l'une des revendications 1 à 5, un dispositif de réception complémentaire selon l'une des revendications 6 à 7, ainsi qu'une ligne de transmission entre ledit dispositif d'émission et ledit dispositif de réception.

10. Système de transmission par radio-communication de signaux cryptés caractérisé en ce qu'il comporte un dispositif d'émission selon l'une des revendications 1 à 5, un dispositif de réception complémentaire selon l'une des revendications 6 à 7, ainsi qu'une ligne de transmission entre ledit dispositif d'émission et ledit dispositif de réception, ladite ligne de transmission comportant des moyens de conversion analogique/numérique et des moyens de conversion numérique/analogique respectivement en aval et en amont du dispositif d'émission et du dispositif de réception.

*FIG.1*

*FIG.2*

*FIG.3*

*FIG.4*

## FIG.5

## FIG.6

## FIG.7

*FIG.8a*

*FIG.8b*

*FIG.8c*

*FIG.8d*

*FIG.8e*

## *FIG.9a*

## *FIG.9b*

## *FIG.9c*

## FIG.10

S(t)

Δ(t)

```
┌──────┐
│  43  │
└──────┘
         ┌──────┐
         │  41  │
         └──────┘
                   ┌──────────┐      ┌──────┐      ┌──────────┐
                   │    1     │─────▶│  3   │─────▶│    2     │
                   └──────────┘      └──────┘      └──────────┘
                                          ┌──────┐
                                          │  42  │
                                          └──────┘
                                                      ┌──────┐
                                                      │  44  │
                                                      └──────┘
```

**Office européen des brevets**

## RAPPORT DE RECHERCHE EUROPEENNE

Numéro de la demande

EP 00 40 2085

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | GOEDGEBUER J -P ET AL: "OPTICAL CRYPTOSYSTEM BASED ON SYNCHRONIZATION OF HYPERCHAOS GENERATED BY A DELAYED FEEDBACK TUNABLE LASER DIODE" PHYSICAL REVIEW LETTERS,US,NEW YORK,NY, vol. 80, no. 10, 9 mars 1998 (1998-03-09), pages 2249-2253, XP000856294 ISSN: 0031-9007 * figure 1 * | 1,6,10 | H04L9/00 |
| D,A | FR 2 743 459 A (FRANCE TELECOM) 11 juillet 1997 (1997-07-11) * abrégé; figure 2 * * page 6, ligne 9 - ligne 29 * * page 8, ligne 1 - dernière ligne * | 1,6,10 | |

DOMAINES TECHNIQUES RECHERCHES (Int.Cl.7)

H04L
H04B

Le présent rapport a été établi pour toutes les revendications

| Lieu de la recherche | Date d'achèvement de la recherche | Examinateur |
|---|---|---|
| LA HAYE | 7 novembre 2000 | Holper, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 2085

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-11-2000

| Document brevet cité<br>au rapport de recherche | Date de<br>publication | Membre(s) de la<br>famille de brevet(s) | Date de<br>publication |
|---|---|---|---|
| FR 2743459 A | 11-07-1997 | EP 0783215 A<br>US 6018582 A | 09-07-1997<br>25-01-2000 |

EPO FORM P0460

Pour tout renseignement concernant cette annexe : voir Journal Officiel de l'Office européen des brevets, No.12/82